# EUROPEAN PATENT APPLICATION

(11) **EP 4 744 770 A1**
(43) Date of publication of application: **20.05.2026**
(21) Application number: 25160488.0
(22) Date of filing: 27.02.2025
(51) Int. Cl.: B01J 20/28

(54) **POLYHIPE MONOLITH**

(71) Applicant: BIOCHROMATOGRAPHIX INTERNATIONAL PTE. LTD., 079903 Singapore (SG)
(72) Inventor: WHEELWRIGHT, Scott M., Tempe, Arizona 85282 (US); PODGORNIK, Ales, 6310 Izola (SI); JUNGBAUER, Alois, 1210 Vienna (AT); MRAVLJAK, Rok, 2390 Ravne na Koroskem (SI)
(74) Representative: Redl, Gerda

(57) **Abstract**

A Polymerized High Internal Phase Emulsion (polyHIPE) chromatographic material comprising:
(a) a polyHIPE monolith comprising interconnected macropores, and;
(b) polymeric agglomerates which are bound to the monolith within said macropores.

## Description

### FIELD OF THE INVENTION

The invention relates to a monolithic Polymerized High Internal Phase Emulsion (polyHIPE) chromatographic material and its use for chromatographic separation of biological substances.

### BACKGROUND OF THE INVENTION

Chromatography represents one of the most important techniques for purification of various molecules, especially when high purity is required. Separation occurs by interaction of the molecule with the stationary phase. The stationary phase together with the mobile phase represents the chromatographic system. There are different types of chromatographic stationary phases employed. A stationary phase is defined by physical and chemical composition. Most commonly used are porous beads packed into the chromatographic column. Such material exhibits high surface area but most of this surface area is within pores, filled with a liquid phase also referred to a stagnant mobile phase. Within the pore the only transport mechanism into the pores is diffusion which limits the performance such as dynamic binding capacity and resolution, since substantial time is required for molecules to diffuse into and out of the pores. As a consequence, chromatographic performance depends on residence time defined as column length divided by the linear velocity of the mobile phase. With decrease of residence time, resolution and dynamic binding capacity decrease. Large molecules and nanoparticles exhibit very low diffusivity, which renders efficient purification very time consuming, lowering the overall purification productivity and throughput. Furthermore, the diameter of pores might be too small to allow penetration of large molecules or nanoparticles, further decreasing the binding capacity because only the outer surface of the beads can be utilized for binding which is usually a small fraction of the total surface area.

To overcome this issue, different types of stationary phases have been proposed and one of the most recent types is monoliths. Monoliths consist of a single piece of porous material of desired dimension and geometry. In contrast to porous beads, all pores are open, forming a network of interconnected channels. As a consequence, the entire transport through the monolith is based on convection, avoiding any diffusion limitations. The important consequence of this transport mechanism is that resolution and dynamic binding capacity become flow independent or independent of residence time, allowing achievement of high productivity / throughput and resolution. This is especially important for isolation of large molecules and nanoparticles for which transport is no longer affected by their low diffusivity.

Monoliths can be prepared by different chemistries exhibiting different microstructures. To allow implementation of a mobile phase at high flow rates, permeability of such material should be sufficiently high to avoid excessive pressure drop caused by friction between a mobile and a stationary phase.

Permeability of any packed bed, including monoliths, depends on the stationary phase microstructure either the size of the flow through pores in monoliths or the size and shape of the channels in-between the particles of a packed bed through which a mobile phase flows. As in case of monoliths, the surface on which molecules adsorb is actually the surface of the open pores / channels and the total available surface is limited since too small open pores would result in exceedingly high pressure. The lowest pore size is therefore limited by pressure drop limitation. Also, the binding surface area is limited, which defines the binding capacity. To overcome these limitations, several approaches have been proposed, such as grafting of polymer chains on the pore surface, coating the pore surface with a porous polymer or binding nanoparticles. While these approaches indeed increase the surface area and thus also the binding capacity, they also inevitably decrease the pore size which causes an increase in the pressure drop. This is especially important, since permeability increases reciprocally proportional to the square of the open pore diameter.

Another structural parameter affecting permeability is open porosity: the higher the open porosity, the higher the permeability, without scarifying surface area. While a high porosity seems to be preferred, an increase of porosity substantially affects mechanical properties. There is an exponential decrease in material mechanical stability with porosity increase, which exponent depends on the material microstructure. One of the lowest exponent values was found for Polymerized High Internal Phase Emulsion (polyHIPE) monoliths (Poljanec et al. 2024). This allows preparing a material with a nominal porosity of 0.9 and beyond, while still exhibiting good mechanical stability. Benefiting from this property, a hydrophilic polyHIPE material was described for chromatographic separation (SI22128A, BIA Separations). SI22128A discloses preparation and use of porous, water-in-oil type monolithic polymers prepared by radical polymerization of emulsions with a high proportion of internal phase.

Due to particularities of the microstructure, however, the dynamic binding capacity of a polyHIPE material is low, which limits its wider implementation (Krajnc et al. 2005). To overcome the low dynamic binding capacity of polyHIPE material several approaches have been proposed. One approach is to introduce dead-end pores into the monolith backbone (US11180626B2). This approach indeed increases the surface area and binding capacity, however at the expenses of introducing diffusional resistance, which limits the application of such material for separating macromolecules and nanoparticles. The same is true when the surface is significantly increased via introduction of hypercrosslinked resins into polyHIPE material (Castaldo et al. 2023).

Podgornik et al. (2014) have described a design of methacrylate monoliths through their mechanical properties.

EP1618950A1 discloses an inorganic monolithic material that includes macropores having an inner surface and nanoparticles attached to the inner surface of the material.

WO2016042321A1 discloses a mesoporous composite material comprising carbon nanoparticles dispersed in a mesoporous carbonaceous material.

US11439977B2 discloses chromatographic materials and the preparation of inorganic and organic hybrid materials wherein a surrounding material is condensed on a superficially porous hybrid core material that allows for families of different hybrid packing materials to be prepared from a single core hybrid material.

None of the proposed approaches improves material performance for purification of large macromolecules and nanoparticles. There is a need for a porous monolithic chromatographic material exhibiting high, flow-unaffected dynamic binding capacity, while preserving high permeability.

### SUMMARY OF THE INVENTION

It is the objective to provide an improved chromatographic material that is characterized by a flow independent separation efficiency. It is a further objective to provide such chromatographic material for chromatographic separation of biological substances such as large molecules, viruses or virus-like particles.

The object is achieved by the subject matter as claimed and as further described herein.

The invention provides for a Polymerized High Internal Phase Emulsion (polyHIPE) chromatographic material comprising:
(a) a polyHIPE monolith comprising interconnected macropores, and;
(b) polymeric agglomerates which are bound to the monolith within said macropores.

Specifically, the polyHIPE chromatographic material is a continuous bed, in particular a continuous bed with the three-dimensional architecture of a monolith, such as suitable for use as a stationary phase for liquid chromatography, in particular preparative chromatography.

The polyHIPE chromatographic material is herein also referred to as "composite material".

Specifically, the polyHIPE chromatographic material is a porous monolithic polymer material such as used in liquid chromatography.

According to a specific aspect, the polyHIPE monolith comprises a porous structure comprising or consisting of the macropores and interconnections.

Specifically, the macropores are spherical macropores ("voids", also called "void pores", or VP), such as result from a polymerized emulsion for making polyHIPEs.

Specifically, the interconnections between the macropores are through interconnecting pores (IP, also referred to as "channels").

The interconnected channels can facilitate mass transport. Interconnecting channels act like windows between the void pores. Specifically, both types of pores (VPs and IPs) are flow-through pores. The interconnectivity of the void pores makes it possible to prepare a monolithic structure that enables mobile phase access throughout the entire porous monolith.

The invention is based on the surprising finding that filling the macropores of a polyHIPE monolith with polymerized agglomerates as described herein increases the binding capacity even at high flow rates. The polymerized agglomerates are specifically non-porous. Specifically, the agglomerates increase the accessible surface for efficient chromatographic separation. Even when the macropores of the polyHIPE monolith are filled completely (such that no more agglomerates can be filled into the macropores), the flow rate is still sufficient, because the convective flow and transport is mainly determined by the interconnecting pores of the polyHIPE monolith. Therefore, such chromatographic material could be used with a separation efficiency independent of the flow rate even when separating large biological substances.

The polymerized agglomerates are specifically understood as particles, also referred to as agglomerated particles or particular agglomerates.

The agglomerates can be bound to the void wall of the polyHIPE monolith by covalent binding *e.g.,* through a polymerization reaction. Specifically, the agglomerates can be bound to the void wall through a polymerization reaction, such as to allow covalent binding. Since they can be tightly bound, they introduce no dead-end pores and therefore there is no diffusion limitation.

It has previously been demonstrated that pressure drop on polyHIPE materials depends on interconnecting pores (Mravljak et al. 2021). Therefore, partial coverage of the void pore surface may lead to a negligible decrease in permeability. On the other hand, if some permeability can be sacrificed, void pores can even be completely filled with agglomerates, forming rigid permeable polymeric filling of voids. The amount of void pore surface coverage therefore represents a powerful tool to adjust chromatographic performance of the polyHIPE monolith described herein.

According to a specific aspect, the chromatographic material comprises macropores with an average diameter ranging between 0.5 and 10 µm, or between 1.0 and 10 µm, preferably at least any one of 0.5, 1.0, 1.5, 2.0, 2.5, 3.0, 3.5, 4.0, 4.5, 5.0, 5.5, 6.0, 6.5, 7.0, 7.5, 8.0, 8.5, 9.0, 9.5, up to 10 µm, and/or up to any one of 10, 9.5, 9.0, 8.5, 8.0, 7.5, 7.0, 6.5, 6.0, 5.5, 5.0, 4.5, 4.0, 3.5, 3.0, 2.5, 2.0, 1.5, or 1.0 µm.

According to a specific aspect, the chromatographic material comprises interconnecting pores with an average pore size ranging between 0.5 and 5 µm, or between 1.0 and 5 µm, preferably at least any one of 0.5, 1.0, 1.5, 2.0, 2.5, 3.0, 3.5, 4.0, 4.5, up to 5 µm, and/or up to any one of 5, 4.5, 4.0, 3.5, 3.0, 2.5, 2.0, 1.5, or 1.0 µm.

Specifically, the average pore size and pore size range can be determined by a suitable test, such as scanning electron microscopy (SEM) and respective SEM image analysis. The pore size can also be determined by pressure drop measurement, which is less expensive and time consuming. A correlation between SEM and pressure drop measurement has been established (Mravljak et al. 2021).

Specifically, pore size distribution can be determined by SEM image analysis.

According to a specific aspect, the chromatographic material comprises a porosity of at least any one of 50%, 55%, 60%, 65%, 70%, 75%, 80%, 85%, 90%, or 95%, preferably up to any one of 95%, 90%, 85%, or 80%, preferably between 50% and 95%, or between 50 and 90%, or between 50 and 85%, or between 50 and 80%, or between 55% and 95%, or between 55 and 90%, or between 55 and 85%, or between 55 and 80%, or between 60 and 95%, or between 60 and 90%, or between 60 and 85%, or between 60 and 80%, or between 65 and 95%, or between 65 and 90%, or between 65 and 85%, or between 65 and 80%, or between 75% and 95%, or between 75 and 90%, or between 75 and 85%, or between 75 and 80%, or between 80 and 95%, or between 80 and 90%, as determined by a suitable porosity test.

Specifically, the porosity can be determined as flow-through porosity or static porosity. These have been shown to be very close (Krajnc et al. 2005 or Mravljak et al. 2021), therefore either can be used.

Porosity refers in particular to nominal porosity, also known as total porosity or static porosity, and flow-through porosity, also known as extraparticle porosity. The nominal/total/static porosity is the total porosity of a porous material, often expressed as a fraction of the total volume. It includes all void spaces, both accessible and inaccessible to fluid flow. The flow through porosity/extraparticle porosity refers to the fraction of the material's volume that contributes to actual fluid flow. Pores that do not allow fluid passage are excluded.

For monoliths, it has been shown that nominal/total/static porosity to be very close to flow through porosity/extraparticle porosity (Krajnc et al. 2005; Mravljak et al. 2021), therefore either can be used to determine porosity of the chromatographic material described herein.

For example, the following porosity tests are suitable for determining the porosity of the chromatographic material described herein.

Flow-through porosity can be determined by a pulse response measurement using a non-retained tracer. For example, a small pulse of a non-retained tracer molecule such as 3% acetone aqueous solution or 1M NaCl aqueous solution is injected. In the first experiment, the tracer is injected into the chromatographic system to which an empty housing is connected, and in a second experiment, the tracer is injected into the chromatographic system to which the column with the monolith is connected. The chromatography system is equipped with a UV detector or conductivity detector to monitor the elution of the tracer.

The retention volume for each peak is calculated by multiplying the retention time by the flow rate. Flow-through porosity is then determined by subtracting the system volume from the total volume and dividing the result by the monolith volume.

Static porosity can be determined by measuring the weight difference. The weight difference of a monolith immersed in water or an aqueous salt solution containing a high-density salt such as barium sulfate, zinc chloride, cesium chloride can be used to determine the static porosity. For example, the PolyHIPE monolith is immersed in water and left overnight. The weight of the monolith is determined and then the monolith is immersed in *e.g.* 3M aqueous CsCl solution and left overnight and then the weight is determined. The difference in weight divided by the difference in density of the immersed solutions gives the pore volume. Dividing the pore volume by the volume of the monolith gives the static porosity

According to a specific aspect, the macropores of the polyHIPE monolith are filled with the polymeric agglomerates to a certain extent. Specifically, it can be completely filled, resulting in a porosity based on the interstitial space between the agglomerates. In particular, the degree of filling has an impact to the porosity of the chromatographic material. Specifically, the agglomerates fill between 1% and 40% of the volume of said macropores, as determined by a porosity test, preferably at least any one of 5%,10%, 20%, 30%, up to 40%, preferably between 10 and 40%, or between 10 and 40%, or between 10 and 30%, or between 10 and 20%, as determined by a suitable porosity test.

Specifically, the volume percentage of filling is determined as the average percentage of volume of the macropores that is filled with the agglomerates.

The volume percentage of filling in the macropores of the chromatographic material described herein can be determined by measuring the porosity (*e.g.,* with a test such as described herein), before and after the filling. For example, the same tests as used for determining static and flow-through porosity are used. The obtained porosity is subtracted from the porosity determined for the initial polyHIPE monolith (without the filling). Since the majority of porosity consists of the void volume, a porosity decrease is due to the volume filled by the agglomerates.

According to a specific aspect, the polymeric agglomerates have an average size ranging from 5 nm to 5 µm, preferably at least any one of 5, 10, 15, 20, 25, 30, 35, 40, 45, 50, 60, 70, 80, 80, 100, 200, 300, 400, 500, 600, 700, 800, 900 nm, or at least any one of 1, 2, 3, 4, up to 5 µm; and/or up to any one of 4, 3, 2, 1 µm, or up to any one of 1000, 900, 800, 700, 600, 500, 400, 300, 200, 100, 90, 80, 70, 60, 50, 45, 40, 35, 30, 25, 20, 15, or 10 nm, as determined by a suitable test.

The size can be determined for the agglomerates when bound to the macropores, or outside of the monolith, *e.g.,* when the agglomerates are preformed before introducing them into the monolith. For example, the size of the agglomerates can be determined by a SEM method.

According to a specific aspect, the chromatographic material comprises an surface area ranging between 2 and 500 square meters per mL (or per gram), preferably at least any one of 2, 3, 4, 5, 10, 15, 20, 25, 30, 35, 40, 45, 50, 60, 70, 80, 90, 100, 200, 300, 400, up to 500 m²/mL, or up to any one of 500, 400, 300, 200, 100, 90, 80, 70, 60, 50, 45, 40, 35, 30, 25, 20, 15, 10 or 5 m²/mL (or m²/g), as determined by a suitable test.

The surface area can be determined for the chromatographic material as a whole (such as used in a device for liquid chromatography), or in part, *i.e.,* in samples of the chromatographic material. The surface area is typically measured as the sum of the inner surface of the monolith and the additional surface of the agglomerates.

The following tests are suitable for determining the surface area of the chromatographic material described herein. Standard methods such as BET (Brunauer, Emmett and Teller) or Hg porosimetry can be used for measuring the surface.

Accessible area typically depends on the molecule size of the probe (the target molecule). Therefore, the maximal binding capacity for a target molecule can only be determined with the same target molecule.

Standard methods such as BET or Hg porosimetry can also be used, though this provides the surface area accessible for small molecules and would not be representative of large ones.

According to a specific aspect, the chromatographic material comprises a binding capacity, in particular a dynamic binding capacity, such as to allow sufficient adsorption of a target during chromatography.

The dynamic binding capacity (DBC) is herein understood as the amount of a target such as a molecule or particle (*e.g.,* viral particles, vesicles, or macromolecules) which can be bound for a certain residence time. The DBC is typically lower compared to the equilibrium binding capacity, which represents the saturation of the chromatography column with the respective target. The DBC can be determined by a so-called breakthrough experiment. For example, the DBC is determined by pumping a target solution of known concentration through the chromatographic material. Absorbance or concentration at the outlet of the chromatographic material is measured to determine a break-through curve (BTC) indicating concentration of non-bound target, due to a surface saturation, at the outlet. For instance, DBC at 50% breakthrough (DBC₅₀) is calculated from time at 50% of maximal BTC absorbance multiplied by a sample flow-rate and sample concentration. The obtained value is divided by the volume of the chromatographic material giving DBC₅₀ in mg/ml.

According to a specific aspect, the chromatographic material has binding capacity with a DBC₅₀ of 1-10 mg/ml for targets such as macromolecules (*e.g.,* plasmids); and/or a DBC₅₀ of 10¹¹-10¹⁴ particles/ml for targets such as viral particles, or vesicles (*e.g.,* exosomes).

According to a specific aspect, the chromatographic material is permeable for a convective flow-through.

Specifically, permeability is determined by a standard method such as follows. A mobile phase of known viscosity is pumped through the chromatographic material at different flow-rates. The mobile phase linear velocity is calculated by dividing the mobile phase flow rate by the cross-section of the chromatographic material. At each flow-rate the pressure drop is measured. The measured pressure drop is plotted (X-axis) against the product of mobile phase viscosity, thickness of the chromatographic material and linear velocity (Y-axis). The slope of the line represents the permeability of the chromatographic material.

According to a specific aspect, the monolith is formed in a shape and/or is provided in a respective device, which shape or device is selected from the group consisting of a column, a disk, a cylinder, a capillary, a conus, an annulus, a rod, or cubus.

According to a specific aspect, the polyHIPE chromatographic material described herein is suitable for use in a bind-elute or flow-through chromatography.

According to a specific aspect, the polyHIPE chromatographic material described herein is suitable for use in radial or axial flow chromatography.

Specifically, the polyHIPE chromatographic material is comprised in (or provided in) a device suitable for radial or axial flow chromatography. Specifically, the chromatographic material is packed into the respective device.

According to a specific aspect, said monolith and/or said agglomerates comprise a polymeric material. Specifically, the polymeric material is a polymerized material.

According to a specific aspect, the polyHIPE monolith comprises or consists of a polymerized material, in particular a polymer-based monolithic material.

According to a specific aspect, the chromatographic material comprises functional groups suitable for chromatography, preferably wherein the chromatography is selected from for the group consisting of affinity chromatography, hydrophobic interaction chromatography, ion exchange chromatography (*e.g.,* anion-exchange or cation-exchange), or a mixed mode chromatography.

Specifically, the polyHIPE monolith comprises a polymer formed by polymerizing monomers in a polymerizing high internal phase emulsion. An emulsion for making polyHIPEs typically comprises an organic phase comprising monomers, preferably in addition cross-linkers, and an aqueous phase optionally comprising salt. In addition, the emulsion preferably comprises a surfactant, a polymerization initiator, and optionally a porogen. A porogen is only optional when producing the polyHIPE monolith, because voids are already formed by the aqueous phase.

Typically, a monomer forms polymer chains during polymerization. A cross-linker is herein understood as a monomer which is polymerized during a polymerization reaction, and which can connect and cross-link polymer chains in-between *e.g.,* by a covalent or ionic bond. In particular, a cross-linker comprises at least two reactive groups (*e.g.,* double bonds) for linking the polymer chains. For example, the polymer chains are made from monomers with epoxy groups, and the optional cross-linking monomer has at least two reactive groups but does not have epoxy groups.

The ratio between monomers that form polymer chains, and monomers which act as a cross-linker can influence the structure and rigidity of the chromatographic material. A typical ratio would be *e.g.,* within 0.5:1 and 10:1, preferably between 0.5:1 - 5:1, or between 1:1 and 5:1, or between 1:1 and 4:1, or between 2:1 and 4:1, preferably about 2:1 or 3:1.

According to a specific aspect, the polymeric agglomerates comprise or consist of a polymerized material, in particular polymer-based agglomerates.

Specifically, the polymeric agglomerates comprise or consist of a polymer formed by polymerizing monomers. Specifically, the polymeric agglomerates comprise or consist of monomers that are polymerized by a polymerization reaction. Specifically, the polymeric agglomerates are polymerized agglomerates.

Specifically, said monolith and/or said agglomerates comprise polymeric material produced by polymerizing monomers in the presence of crosslinkers.

At least some of the components of the polymeric material (in particular, at least some or all of the monomers) as used in the polymer of the monolith and the agglomerates can be the same or different.

According to a specific aspect, said monolith and said agglomerates comprise polymeric material made from the same monomers. Specifically, the polymeric material of said monolith and said agglomerates can be made from the same monomers *e.g.,* monomers including polymer chain forming monomers and crosslinking monomers.

For example, the polymeric material can be made from the same monomers with epoxy groups, and optionally the same crosslinking monomers which do not have epoxy groups.

Specifically, the polymeric material of said monolith and said agglomerates can be made from the same methacrylate monomers. According to a specific aspect, the monomers are methacrylate monomers such as GMA and optionally EDMA, which is acting as a crosslinker. According to a preferred example, GMA and EDMA monomers are used, in particular at a ratio between 1:1 and 4:1, or between 2:1 and 4:1, preferably about 2:1 or 3:1.

Specifically, said monolith and said agglomerates comprise the same polymeric material.

According to a specific aspect, said monolith and/or said agglomerates comprise polymeric material comprising a methacrylate polymer (*i.e.,* polymethacrylate), an acrylate polymer (*i.e.,* polyacrylate), or a combination thereof. According to a specific aspect, said monolith and/or said agglomerates comprise polymeric material comprising or consisting of a methacrylate polymer, an acrylate polymer, or both.

Specifically, the acrylate or methacrylate polymer is understood as polymeric material comprising end group(s) chosen from acrylate and methacrylate, respectively.

Acrylate and methacrylate polymers are the respectively derivatives of acrylic or methacrylic acid.

Specific examples of acrylate polymers are of any one or more of ethylhexyl acrylate (EHA), butyl acrylate (BA), methyl acrylate, ethyl acrylate, propyl acrylate, butyl acrylate, pentyl acrylate, hexyl acrylate, decyl acrylate, lauryl acrylate, octyl acrylate, acrylic dodecyl acid, stearyl acrylate, 2-ethylhexyl acrylate, cyclohexyl acrylate, bornyl acrylate, 2-ethoxyethyl acrylate, 2-butoxyethyl acrylate, 2-hydroxyethyl acrylate, tetrahydrofurfuryl acrylate, ethyl carbitol acrylate, 2-hydroxypropyl acrylate, 4-hydroxybutyl acrylate, polyethylene glycol acrylate, glycidyl acrylate, etc.

Specific examples of methacrylate polymers are of any one or more of glycidyl methacrylate (GMA), ethylene glycol dimethacrylate (EGDMA or EDMA), poly(methyl methacrylate) (PMMA), 2-hydroxyethyl methacrylate (HEMA), methyl methacrylate, t-butyl methacrylate, methacrylic acid sec-butyl, i-butyl methacrylate, i-propyl methacrylate, decyl methacrylate, lauryl methacrylate, octyl methacrylate, dodecyl methacrylate, stearyl methacrylate, cyclohexyl methacrylate, bornyl methacrylate, benzyl methacrylate, glycidyl methacrylate, polyethylene glycol methacrylate, 2-hydroxyethyl methacrylate, tetrahydrofurfuryl methacrylate, methoxyethylene glycol methacrylate, ethyl carbitol methacrylate, 2-hydroxypropyl methacrylate, 4-hydroxybutyl methacrylate, 2- (dimethylamino) ethyl methacrylate, 2- (diethylamino) ethyl methacrylate, 3- (dimethylamino) propyl methacrylate, 2- (isocyanato) ethyl methacrylate, methacrylic acid 2, 4,6-tribromophenyl, 2,2,3,3-tetrafluoropropyl methacrylate, 2,2,2-trifluoroethyl methacrylate, 2,2,3,3,3-methyl methacrylate methacrylic acid esters such as tafluoropropyl, methacrylic acid 2,2,3,4,4,4-hexafluorobutyl, diacetone methacrylate, etc.

The polymeric agglomerates can be bound to the macropores.

According to a specific aspect, at least part of (or all of) said agglomerates are bound to the monolith, in particular to the macropores of the monolith.

Specifically, the agglomerates (at least part or all of the agglomerates) are bound to the inner surface of said macropores.

The agglomerates can be bound to each other. Thus, agglomerates can be bound to the macropores directly or indirectly *i.e.,* via binding to other agglomerates that are bound to the macropore.

Binding to the macropore is preferably by covalent binding, such as by a polymerization reaction. A polymerization reaction preferably leads to covalent binding of monomers.

The invention further provides for a method of preparing the polyHIPE chromatographic material described herein, comprising the steps of:
(a) preparing a polyHIPE monolith comprising interconnected macropores;
(b) binding polymeric agglomerates to the monolith within said macropores, by a polymerization reaction.

Specifically, the agglomerates can bind to the inner surface of the macropores by a polymerization reaction.

Specifically, the agglomerates can be formed within the macropores and bind to the inner surface of the macropores by a polymerization reaction.

According to a specific aspect, the method comprises
(a) preparing a polyHIPE monolith comprising interconnected macropores; and
(b) filling the macropores with polymeric agglomerates, and binding the polymeric agglomerates to the monolith within said macropores, by a polymerization reaction.

Specifically, said filling can be through a polymerization reaction within the polyHIPE monolith, in particular within the macropores of the polyHIPE monolith, thereby producing the agglomerates within the polyHIPE monolith.

Specifically, the agglomerates can be produced outside the polyHIPE monolith such as in a separate containment, thereby obtaining preformed polymeric agglomerates, before introducing the preformed polymeric agglomerates into the polyHIPE monolith. Specifically, the introduced preformed polymeric agglomerates can further agglomerate by a polymerization reaction within the macropores, and thereby bind to or within macropores by a polymerization reaction

According to a specific aspect, the polyHIPE monolith is prepared by methods well-known in the art for preparing monolithic polyHIPE chromatography materials.

The agglomerates can be prepared before said binding step, in particular outside the monolith, and/or during said binding step, in particular within the monolith, in particular within the macropores of the monolith.

Specifically, agglomerates can be prepared before and during said binding step. According to a preferred aspect, the agglomerates are preformed, *i.e.* before introducing the agglomerates into the monolith, in particular introduced into the macropores, and further agglomerated within the macropores, thereby obtaining binding of the agglomerates within the macropores. Preforming and further agglomeration and binding within the macropores can be through a polymerization reaction, in particular, the same polymerization reaction can be used for preforming and further agglomeration and binding.

According to a specific example, the polyHIPE monolith described herein can be prepared in at least two steps: in a first step, a polyHIPE monolith with porosity up to 90% can be prepared via emulsion polymerization. Such polyHIPE monolith is herein also understood as an "initial" polyHIPE monolith, or a polyHIPE monolith skeleton. After polymerization is completed, the aqueous phase can be removed from the monolith and substituted with a mixture containing monomers and porogens. In a second step, bulk polymerization can be performed resulting in a partial or complete filling of the voids, *e.g.,* depending on the monomer to porogen ratio.

According to another specific example, the mixture of monomers and porogens can be prepolymerized (at least partially, or fully) to form agglomerates before being introduced into the polyHIPE skeleton. In such case, the size and distribution of the preformed agglomerates can be determined before filling the monolith. Once voids are filled, polymerization can be continued, allowing binding the introduced agglomerates to the polyHIPE skeleton via polymerization of residual monomers.

The disclosure characterizing the chromatographic material and its components as described herein shall also apply to characterize the method and uses described herein, and *vice versa.*

In particular, the method described herein is characterized by the polymeric material of the monolith and/or the agglomerates as described for the chromatographic material. Specifically, said polymeric material comprises or consists of a methacrylate polymer, an acrylate polymer, or both, such as further described herein.

According to a specific aspect, the method described herein further comprises functionalizing the chromatographic material by adding functional groups suitable for chromatography, preferably wherein the chromatography is selected for the group consisting or affinity chromatography, hydrophobic interaction chromatography, ion exchange chromatography, slalom chromatography, or a mixed mode chromatography.

Typically, after polymerization is completed, non-reacted epoxy groups present on the polymerized material (such as non-reacted epoxy groups present on glycidyl methacrylate) can be further modified. Functional groups can be added by methods well-known in the art, such as *e.g.,* described in E.G. Vlakh, T.B. Tennikova, Preparation of methacrylate monoliths, J. Sep. Sci. 2007, 30, 2801 - 2813.

The invention further provides for a use of the chromatographic material described herein in a method of chromatographic separation, in particular liquid chromatography, such as *e.g.,* a radial or axial flow chromatography. Specifically, the chromatographic material described herein used in a bind-elute or flow-through chromatography. Specifically, the chromatographic separation is a preparative chromatographic separation, such as used for preparing purified substances or compounds on an industrial scale.

According to a specific aspect, the chromatographic separation is by chromatography selected from for the group consisting of affinity chromatography, hydrophobic interaction chromatography, ion exchange chromatography *(e.g.,* anion-exchange or cation-exchange), slalom chromatography, or a mixed mode chromatography.

Load, wash and elution conditions for use in the chromatographic separation are well-known in the art, and will depend on the specific chromatographic material and biological substance used.

Specifically, the biological substance is separated from a medium, such as a liquid.

Specifically, the biological substance is a macromolecule, vesicle or particle.

Specifically, the biological substance has a large size of *e.g.,* 15 nm - 1000 nm, or 20 nm - 1000 nm.

Preferably the biological substance is selected from the group consisting of viral particles, such as *e.g.,* viruses or virus-like particles (VLP), vesicles (*e.g.,* exosomes), or macromolecules (*e.g.,* nucleic acid molecules, such as plasmids, RNA).

### FIGURES

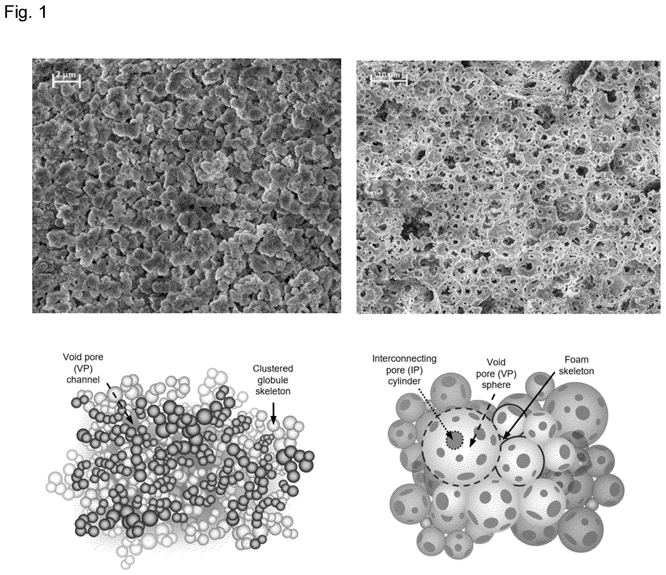

Figure 1: Scanning electron microscopy (SEM) representative pictures of cauliflower (left, porosity 0.45) and polyHIPE (right, porosity 0.85) microstructures together with appropriate drawings. Cauliflower structure consists of interconnected globules with flow-through channels in-between, while polyHIPE structure consists of interconnected voids. (Poljanec et al. 2024)

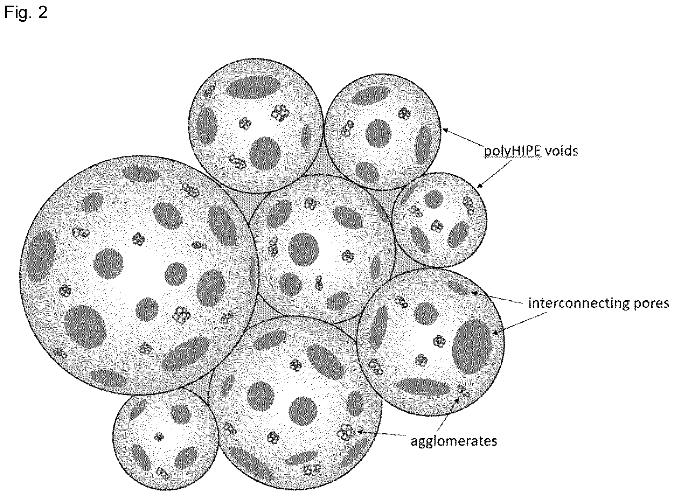

Figure 2: Representative picture of polyHIPE microstructures comprising polymeric agglomerates bound within the polyHIPE voids.

### DETAILED DESCRIPTION OF THE INVENTION

Unless indicated or defined otherwise, all terms used herein have their usual meaning in the art, which will be clear to the skilled person. Reference is for example made to the standard handbooks. Methods to purify biological substances by chromatography such as described herein may employ tools, methods and techniques known in the art *e.g.*, described by Giorgio Carta, Alois Jungbauer "Protein Chromatography: Process Development and Scale-Up" (2010 Wiley-VCH Verlag GmbH & Co. KGaA), Emily P. Wen, Ronald Ellis, Narahari S. Pujar "Vaccine Development and Manufacturing" (2015 John Wiley & Sons, Inc.), Glyn Stacey, John Davis " Medicines from Animal Cell Culture" Chapter 18 (M. Wilson "Purification Methods"), Amine Kamen, Laura Cervera "Bioprocessing of Viral Vaccines" (2022, CRC Press).

The terms "comprise", "contain", "have" and "include" as used herein can be used synonymously and shall be understood as an open definition, allowing further members or parts or elements. "Consisting" is considered as a closest definition without further elements of the consisting definition feature. Thus, "comprising" is broader and contains the "consisting" definition.

Specific terms as used throughout the specification have the following meaning:
The term "chromatographic material" as used herein shall refer to a material that is particularly suited or adapted for use in chromatography.

The term "chromatography" refers to any kind of technique (*e*.*g*., a preparative technique) which separates a product of interest (*e*.*g*. macromolecules, vesicles, or viral particles) from other molecules present in a mixture by differential partitioning between a mobile phase and a stationary phase. The stationary phase is thereby preferably held in place, while the mobile phase moves in a definite direction. Partitioning is to be understood to occur repeatedly as the sample flows with the mobile phase along or through a dimension, *e.g*. length, of the stationary phase.

Separation may be due to adsorption, absorption, size exclusion, ion exchange or other interactions with chromatographic material which is typically packed in a suitable device. A chromatographic device is herein understood as any enclosure or housing adapted for use in a chromatography process that is suitable for containing a chromatographic material such as the polyHIPE chromatographic material described herein, and enabling a medium and/or buffer to contact the chromatography material and to carry out the chromatography.

Specifically, the chromatographic material described herein may comprise an affinity chromatography material or a respective affinity chromatography ligand, which refers to a material or ligand that interacts with one or more molecules present in the mobile phase of the chromatography. An affinity chromatography can be used in a bind- and-elute mode, wherein the desired molecules interact with the stationary phase until certain conditions are created that cause the desired molecules to release from the stationary phase and elute from the chromatography resin; or in a pass through mode, wherein one or more impurities present in the mobile phase, but not the desired molecules, interact with the chromatography resin, allowing the desired molecules to "pass through" the chromatography resin, while the impurities remain associated with the chromatography resin. Specific aspects refer to anion exchange chromatographic material, cation exchange chromatographic material, pseudo affinity chromatographic material, hydrophobic interaction chromatographic material, and any combination thereof. In some aspects, the chromatographic material comprises a mixed-mode material. Mixed mode chromatography typically employs chromatographic material comprising more than one type of functional groups, or more than one modes such as ion-exchange and affinity modes. This unique property of mixed mode resin enables binding through multiple chromatographic modes in a single material (such as a monolithic material as described herein). Most chromatographic materials in this class comprise a ligand containing a hydrophobic group (*e*.*g*. phenyl, benzyl, propyl, butyl, etc.) and a charged group (*e*.*g*. cation: sulfate, carboxylic acid, methyl carboxylic acid; or an anion: quaternary amine, diethylaminoethyl, diethylaminopropyl, or quaternary ammonium). However, some chromatographic materials may also contain a hydrophilic group in place of the hydrophobic group, (*e*.*g*. silica, urea, polyethyleneimine, amino or amide groups, cyanopropyl, diol, or aminopropyl).

Slalom chromatography is a chromatographic mode for separating flexible biological molecules, such as nucleic acids. It is a size-fractionation method which includes retention of the biological molecules through the chromatographic material by friction in the flow channels. In this technique, the reptation of the biological molecules through the chromatographic material follows the flow direction.

The term "monolith" as used herein shall refer to a porous three-dimensional chromatographic material having a continuous interconnected pore structure in a single piece. A monolith is prepared, for example, by casting precursors into a mold of a desired shape. The term monolith is meant to be distinguished from a collection of individual particles (such as beads) packed into a bed formation, in which the end product still comprises individual particles in bed formation.

The term "monolith" shall also refer to a continuous bed chromatographic material. A continuous bed chromatographic material is specifically understood as a single piece of highly porous material with interconnected channels that enable the flow of a mobile phase. Monoliths as described herein are particularly understood as an interconnected continuous piece of a porous polymer, typically in the form (or in a respective device) of a single block, a column, a disk, a cylinder, a capillary, a conus, an annulus, a rod, or cubus, or another form or shape suitably used for axial or radial flow chromatography.

Chromatographic monoliths exhibit several advantageous properties, including flow unaffected resolution and dynamic binding capacity, low pressure drop, and high dynamic binding capacity for large molecules. The porosity of monoliths is critical for their performance, and it typically requires a bimodal pore size distribution or a hierarchical porosity such as including different types of pores throughout the monolith.

The monolithic chromatographic material as described herein is specifically based on a porous polymer, in particular a continuous porous polymeric monolith with particular interconnected pores.

The skeleton of a monolith is specifically understood as the solid framework that forms the monolith's porous structure, supporting efficient mass transfer and separation performance.

The monolithic chromatographic material described herein is specifically made from organic polymers. Therefore, it is also referred to as "polymeric" material.

Specific monoliths as described herein are polyHIPE monoliths, which comprise the typical pores of a polyHIPE material. Specifically, a polyHIPE comprises macropores (in particular spherical macropores, which can be also deformed due to a very high porosity) and interconnecting pores which may form channels within the monolith. Specifically, both, the macropores and interconnecting pores are flow-through pores.

The term "Polymerized High Internal Phase Emulsion" (polyHIPE) as used herein shall refer to a polymeric material prepared from emulsions with a high-volume fraction of internal phase. A HIPE (high internal phase emulsion) typically comprises or consists of a continuous phase (monomer and crosslinker) and a dispersed internal phase (typically water in an oil system).

PolyHIPEs can be prepared from either oil-in-water emulsions containing oil soluble monomers, or from water-in-oil emulsions where hydrophilic monomers are contained in the aqueous phase of the emulsion.

According to a specific aspect, HIPE described herein comprises at least a monomer, preferably additionally including a monomeric crosslinker, a surfactant, an initiator of polymerization, and optionally a salt. Typically, the monomer, optionally the monomeric crosslinker, the surfactant, and the initiator of polymerization is comprised in an organic polymerization mixture (also referred to as "continuous phase" or "organic phase"), and optionally the salt is comprised in an aqueous solution (also referred to as "dispersed phase" or "aqueous phase"). The polymerization mixture can be mixed with the aqueous solution to form the HIPE. The size and volume fraction of the internal phase droplets usually dictate the size of the macropores. Macropores in polyHIPE materials are templated by the dispersed phase droplets in the HIPE, with their size and connectivity determined by emulsion composition, surfactant type, and processing conditions. These macropores provide high porosity, permeability, and surface area, making polyHIPEs useful in chromatography applications. Specifically, the volume of the macropores may be controlled by adjusting the ratio between the aqueous solution and organic polymerization mixture used. Furthermore, the size of the macropores may also be controlled by adjusting the composition of the aqueous solution, mixing conditions, the amount of the surfactant, etc.

According to a specific example, the continuous phase of a HIPE emulsion comprises or consists of monomer such as glycidyl methacrylate (GMA) and crosslinker such as ethyleneglycol dimethacrylate (EDMA), *e.g*., at a ratio between 1:1 and 4:1. The ratio defines the number of epoxy groups, which can be further converted into other functionalities or can be implemented as such to create a stationary phase. Therefore, the higher the amount of monomer, the higher is the maximal number of functional groups.

This ratio of monomer and crosslinker may also affect the mechanical properties of the material. A higher content of crosslinker results typically in higher material rigidity.

In addition, the continuous phase may also contain a surfactant. Its role is essentially to produce long term stable emulsions since it increases compatibility between continuous and dispersed phases. A surfactant is characterized by its hydrophilic-lipophilic balance (HLB), which represents the balance of the size and strength of the hydrophilic and lipophilic moieties of a surfactant molecule. The HLB value can be between 0 and 20. According to specific examples of a HIPE, a surfactant with low HLB is preferred, most typically a pluronic surfactant is used such as PL121 is used, *e*.*g*., in an amount between 5% and 20 wt.% of the sum of monomer and crosslinker. The emulsion stability may also have important effects on the polyHIPE morphology. Commonly, the higher the amount of surfactant, the thinner walls and the more open voids are obtained. Typically, an initiator is also added to the organic phase. Different types of initiators can be used, such as an initiator for thermal initiation, an initiator for photoinitiation (or UV initiation), or an atomic transfer radical polymerization (ATRP) initiator. In the case of thermal initiation, azobisisobutyronitrile (AIBN) or benzoyl peroxide (BPO) are most commonly used. For photoinitiation, phenylbis(2,4,6-trimethylbenzoyl)phosphine oxide (Irgacure 819) can be used (for UV initiation), and for ATRP initiation, 4-vinylbenzyl chloride (VBC) can be used.

The aqueous phase may comprise or consist of water. Typically, the aqueous phase comprises a salt concentration to increase the ionic strength which may catalyze the polymerization reaction. Salt typically influences organization of the surfactant, depending on the concentration and salt type, and consequently impacts polyHIPE morphology. A typical salt used is calcium chloride in the amount between 0.4 and 3 weight percent of the aqueous phase. In the case of ATRP initiation, also an ATRP ligand such as N,N,N',N",N"-pentamethyldiethylenetriamine (PMDETA) is preferably added together *e.g*., with a catalyst such as copper chloride dihydrate (CuCl₂·2H₂O).

The prepared HIPE can be polymerized under controlled conditions to initiate and perform the polymerization reaction, thereby obtaining the polyHIPE material. The polymerization reaction is carried out under conditions as necessary for the initiator to initiate the reaction.

According to a specific example, the emulsion is illuminated by UV light for a prolonged period of time, *e.g*. for at least 5 or 6 hours (such as overnight), in the case of photoinitiation.

According to another specific example, the emulsion is held at a temperature e.g., a constant temperature, such as between 50 and 70°C for at least 5 hours, or kept for at least 2 or 3 days at room temperature, in the case of ATRP initiation.

According to another specific example, a photoinitiator and ATRP initiator are used. In such case, the emulsion can be illuminated by UV light for photoinitiation, and additionally left at a certain temperature (in particular as described above) for ATRP initiation.

According to a specific example, polymerization is carried out using an ATRP initiator in the presence of an ATRP ligand (*e.g.,* PMDETA) and a catalytic salt (*e.g.,* CuCl₂·2H₂O). Following such ATRP initiation, it is preferred that the catalytic salt (*e*.*g*., copper (II) chloride) resulting from the AGET ATRP is reduced by adding reductor, such as ascorbic acid (*e*.*g*., ascorbic acid such as ascorbic acid in methanol). Monoliths with a high level of porosity can be obtained by polymerization of a HIPE with a continuous phase containing monomers.

During HIPE polymerization, interconnections between macropores form when thin polymer films between adjacent droplets rupture. The size of these interconnecting pores is particularly controlled by the stability of the emulsion and coalescence of droplets before solidification. The interconnected pores of polyHIPEs form a network of pores that are connected to each other through smaller openings or pore throats, allowing continuous fluid flow through the material.

To obtain polyHIPE monoliths of different pore sizes and porosity, emulsions with different compositions can be used. PolyHIPEs as described herein can *e.g*., be prepared from reactive monomers optionally together with a porogen. The porogen may induce an additional porous structure of the polyHIPE.

Specifically, at least one liquid porogen can be used, which may be a pore forming solvent, a pore forming non-solvent, or a combination of both.

The porogenic solvent may be selected from the group consisting of toluene, tetrahydrofuran and dioxane. The porogenic non-solvent may be selected from the group consisting of aliphatic hydrocarbon, aromatic hydrocarbon, ester, amide, alcohol, ketone, ether, and solutions of soluble polymers. In certain embodiments, the pore forming non-solvent is a C₆-C₂₂ aliphatic alcohol. For example, the pore forming non-solvent may be selected from the group consisting of alcohols, such as butanol, hexanol, decanol, cyclohexanol, dodecanol, or a combination of any of the foregoing. In certain specific embodiments, the pore forming non-solvent is dodecanol, cyclohexanol or the combination of dodecanol and cyclohexanol.

Specific surfactants can be used which allow better control of droplet size resulting in a narrower distribution of pore sizes, and provide higher HIPEs stability, both contributing to uniform polyHIPEs.

Specific polyHIPE chromatographic materials as described herein can be prepared from one monomer or more than one monomer, like one or more of glycidyl methacrylate (GMA), ethylhexyl acrylate (EHA) and/ or ethylene glycol dimethacrylate (EGDMA). Specifically, polyHIPEs are prepared by separately preparing an organic and aqueous phase, the organic phase consisting of the reactive monomers, and the aqueous phase containing water, and salts. According to a typical protocol, the aqueous phase can be added to the organic phase, stirred, and surfactants can be added. The emulsion can then be transferred to a container and cured.

The cross-linking polymerization is a preferred step to achieving the porous structure in the polyHIPE monolith described herein. The polyHIPE-based monolithic separation media are normally obtained by conventional free radical polymerization methods. For cross-linking polymerization, the polymerization usually requires an additional crosslinker like divinylbenzene (DVB) or ethylene glycol dimethacrylate (EGDMA) to create a stable network.

Therefore, according to specific preferred examples, the polyHIPE chromatographic material described herein is produced by polymerizing a HIPE emulsion comprising a monomer, a cross-linker, a surfactant, an initiator of polymerization, and optionally a porogen and/or a salt, as further described herein, wherein in a first step, the polyHIPE monolith is produced, and in a second step, the macropores of the polyHIPE monolith are filled with the polymeric agglomerates as further described herein.

The term "polymer" as used herein means a molecule containing repeating structural units (monomers). A polymer is typically formed from monomers by a polymerization reaction. A polymeric material is herein understood as comprising or consisting of a polymer. A polymeric material may comprise homopolymers, copolymers, or combinations thereof. A copolymer is a polymer formed from two or more different monomers. The term "monomer" includes one, or two or more different monomers.

Polymerization is usually carried out with a catalyst, heat or light, in which monomers combine to form a polymer. Specifically, the polymerization reactions described herein are addition polymerization reactions which occur when a free radical initiator reacts with a double bond in the monomer.

According to a specific aspect, the polyHIPE chromatographic material as used herein is a composite material of a polyHIPE monolith and polymeric agglomerates, which are bound to the monolith within the macropores (the "void pores") of the polyHIPE structure.

Specifically, either of the polyHIPE monolith described herein and the agglomerates described herein are polymeric.

Specifically, the polyHIPE chromatographic material described herein comprises a continuous, interconnected network of macropores prepared through emulsion polymerization, with polymeric agglomerates bound within the macropores. Polymers are specifically clustered into agglomerates and attached to the macropores, in particular to the inner surface of the macropores (the void pores).

The term "polymeric agglomerates" as used herein shall refer to clusters or assemblies of polymer-based material (also referred to as "agglomerates") that are formed by a polymerization reaction. Specifically, the agglomerates are polymer agglomerates. Strong and dense agglomerates are also referred to as "aggregates". Specifically, the polymers within the agglomerates are bound to each other by covalent bonds, such as covalent bonds formed during a polymerization reaction.

According to specific aspects, the polymeric agglomerates described herein are assemblies, typically in the form of cauliflower-like agglomerates, which are introduced into the polyHIPE macropores, such as by placing the agglomerates into the macropores and/or by forming them within the macropores. Specifically, the agglomerates are bound within the macropores, in particular bound to the macropores, through a polymerization reaction. The agglomerates can be bound directly and/or indirectly to the macropores, in particular by bonds that result from a polymerization reaction, which are herein understood as "covalent bonds".

Specifically, the binding of the agglomerates to the macropores is directly by bonds that result from a polymerization reaction between the agglomerates and the inner surface of the macropores.

Specifically, the binding of the agglomerates to the macropores is indirectly by bonds that result from a polymerization reaction to bind agglomerates to each other, thereby forming larger agglomerates or sticky agglomerates, and a polymerization reaction between the agglomerates and the inner surface of the macropores.

Specifically, the binding of the agglomerates to the macropores is directly and indirectly, through the respective polymerization reaction.

Specifically, agglomerates described herein are formed through binding of agglomerates to each other, in particular by bonds that result from a polymerization reaction that forms the agglomerates and/or a polymerization reaction that further links the agglomerates.

Specifically, the agglomerates have a rough surface structure. While nanoparticles are typically spheric, polymeric agglomerates described herein typically have a nonuniform size and shape (in particular, a non-spherical shape, or a cauliflower shape), such as resulting from growing polymers by a polymerization reaction.

Specific polymeric agglomerates are preferred which are chemically compatible with the polyHIPE monolith.

Specifically, the same monomers (and optionally crosslinkers), porogens and initiators as described for the polyHIPE monolith can be used to produce the polymeric agglomerates.

To produce a preferred cauliflower morphology of polymeric agglomerates, monomer (such as glycidyl methacrylate), crosslinker (such as ethylene glycol dimethacrylate), and one or more porogens (such as described herein *e.g*., an alcohol, for example, butanol, hexanol, cyclohexanol and/or dodecanole) can be used. Thermal initiators like *e*.*g*., AIBN or BPO are commonly employed. However, other monomers, crosslinkers, porogens, and/or initiators can be used, such as further described herein with respect to the polyHIPE formation.

Specifically, one or more porogens can be used, thereby causing phase transition during polymerization, *e.g*., alcohols or solvents such as described herein, which can be suitably used for the selected monomer or crosslinker.

The size and density of polymeric agglomerates can be precisely controlled through monomer concentration in the solution, the porogen, polymerization temperature, and process duration. The material may be prepared through a sequential process wherein the polyHIPE monolith is first formed and subsequently modified through immersion in a dilute solution containing monomers and thermal initiator, or by introducing preformed polymeric agglomerates for binding within the macropores, in particular by a further (or continued) polymerization reaction. Optionally, the agglomerates are further agglomerated within the macropores.

Specifically, the nanoparticles and respective agglomerates may be non-porous.

The term "functionalized" as used herein in the context of chromatographic materials shall refer to materials treated to incorporate a functional group, such as a functional group suitably for use in chromatographic materials. Specifically, the chromatography material described herein comprises the polyHIPE monolith containing the polymeric agglomerates within the macropores, which material is functionalized with a functional group (*e*.*g*., a ligand). In particular, the chromatography material can be used as a support (or base) material to which one or more functional groups (or ligands) have been coupled.

Functional groups can be covalently bound to the matrix (in particular, bound to the chromatographic material described herein, or bound to the polyHIPE monolith and/or the agglomerates described herein), most commonly formed after a polymerization reaction.

According to a specific example, the polymers of the chromatographic material comprise epoxy groups, such as present in a polymer when glycidyl methacrylate (GMA) is used as a monomer for the formation of the polyHIPE material, or the polymeric agglomerates.

Specific polymerization reactions are with epoxy groups, such as present in a methacrylate polymer (*e*.*g*., when glycidyl methacrylate, GMA, is used as a monomer) for the formation of the polyHIPE material, or the polymeric agglomerates.

The term "functional group" as used herein in the context of a chromatographic material shall mean a moiety on the surface of the chromatographic material that interacts with compounds to be separated by chromatography. Specifically, functional groups impart a certain chromatographic functionality to a chromatographic stationary phase.

Specifically, a functional group is immobilized on the surface of a support (or base) material. Immobilization may be through binding or otherwise attaching functional groups to the base material *e.g*., via derivatization or coating and crosslinking, imparting the chemical character of the ligand to the base material.

Depending on the type of functional groups compounds to be separated by chromatography (herein referred to as target compounds) can be adhered (or bound, in particular reversibly bound) to the chromatographic material by interactions such as interaction with ligands, ions, hydrophobic groups, etc.

Functional groups are typically present in chromatographic materials such as used for binding or capture chromatography *e.g*., affinity chromatography.

A functional group can be a capturing agent or ligand such as used in affinity chromatography. A ligand may also be termed "specific binding molecule", "specific binding partner", or "capturing molecule". An exemplary ligand for affinity chromatography is Protein A, or antigen-binding molecules, such as including one or more variable antibody domains or full-length antibodies or fragments thereof *e.g*., a VH domain, a VHH domain, a VL domain, an Fv, an scFv, a Fab fragment, an F(ab')₂, scFab, or a diabody.

A functional group capable of hydrophobic interactions may comprise an alkyl-group, an alkenyl-group, an alkynyl-group, a phenyl-group, or organic functional groups selected from 1-18 carbons alkyl, phenyl, amino, and cyano.

A functional group capable of anion exchange may comprise a positively charged group. An exemplary positively charged group is a quaternary ammonium ion, such as diethylaminoethyl, quaternary ammonium, polyethyleneimine, or trimethylammonium ethyl, aminoethyl, p-aminobenzyl or guanidinyl.

A functional group capable of cation exchange may comprise a negatively charged group. An exemplary negatively charged group is a sulfonate functional group, including aryl and alkyl substituted sulfonates, such as sulfopropyl or sulfoethyl.

Functional groups capable of mixed-mode interactions may comprise a functional group capable of ion exchange, and a functional group capable of hydrophobic interactions.

Therefore, the present invention provides for a novel chromatographic material comprising a polyHIPE monolith with polymeric agglomerates bound within its macropores.

The foregoing description will be more fully understood with reference to the following examples. Such examples are, however, merely representative of methods of practicing one or more embodiments of the present invention and should not be read as limiting the scope of invention.

Specific examples provided herein refer to methods of producing the chromatographic material by first forming a polyHIPE monolith through polymerization of the continuous phase of a high internal phase emulsion, followed by binding of polymeric agglomerates within the macropores through polymerization reactions. The examples show that the polymeric agglomerates can be formed and bound within the macropores by a polymerization reaction, or can be preformed, in particular outside the monolith, and then introduced into the macropores of the monolith for binding to (or within) the macropores *e.g*., by a further polymerization reaction.

### EXAMPLES

The following examples illustrate methods for preparing a polyHIPE chromatographic material of the invention.

### Example 1: PolyHIPE monolith comprising polymeric agglomerates - agglomerates formation within the monolith

### a) Chemicals

Glycidyl methacrylate (GMA, Sigma-Aldrich); ethylene glycol dimethacrylate (EGDMA, Merck KGaA); calcium chloride dihydrate (CaCl₂·2H₂O, Honeywell Fluka); Synperonic L 121 surfactant (poly(ethylene glycol)-block-poly(propylene glycol)-block-poly(ethylene glycol), PL121, Sigma-Aldrich); dodecanol (DoOH, ≥98%, Acros Organics); cyclohexanol (CyOH, ≥98%, Penta); denaturated ethanol (EtOH, ≥96%, Stella Tech); methanol (MeOH, ≥99.8%, Sigma-Aldrich); sodium chloride (NaCl, Merck); copper chloride dihydrate (CuCl₂·2H₂O, ≥99%, Merck); photo initiator Irgacure 819 (phenyl bis(2,4,6-trimethyl benzoyl)phosphine oxide, IC819, BASF Schweiz AG); I-ascorbic acid (Sigma-Aldrich, puriss p.a., ACS reagent); N,N,N',N",N"-pentamethyldiethylenetriamine (PMDETA, ≥98.0%, Merck); 4-vinylbenzyl chloride (VBC, 90%, Sigma-Aldrich); and azobisisobutyronitrile (AIBN, [Sigma-Aldrich]).

### b) Preparation of polyHIPE monolith

A polyHIPE monolith was prepared as previously described by Poljanec et al. (2024).

PolyHIPE monoliths with different porosities (porosity calculated based on the high internal phase emulsion [HIPE] composition) ranging from 0.7 to 0.95 were prepared as described for 0.85 porosity provided as an example using activators generated by electron transfer (AGET) for atom transfer radical polymerization (ATRP). In brief, to prepare 100 mL of the HIPE with 85% porosity, a molar mixture of GMA (10.940 g) and EGDMA (5.014 g) was combined in a 2:1 or 3:1 molar ratio, together with surfactant PL121 (1.742 g), ultraviolet (UV) initiator IC819 (0.080 g), and ATRP initiator VBC (95.1 µL) and mixed in the absence of light. The mixture was then poured into a round bottom flask. The aqueous phase, consisting of deionized water (83.025 g), CaCl₂·2H₂O (0.830 g), ATRP catalyst CuCl₂·2H₂O (28.8 µL), and ATRP ligand PMDETA, was added dropwise using a peristaltic pump (Masterflex L/S, Cole-Parmer) at a flow rate of 3 mL/min. The mixture was stirred at 400 rpm (RZR 2021, Heidolph Instruments) with a round bottom flask shaped paddle. Following the addition of the aqueous phase, a solution of ascorbic acid in methanol (0.04 g/mL) was introduced to initiate the reduction of copper (II) chloride (Cu(II)) for AGET ATRP. The resulting mixture was then poured into a cylindrical mold, polymerized under UV light for 5 min, and allowed to react for 3 days to complete the polymerization. The polymer was finally washed extensively with 96 vol.% EtOH before further processing.

### c) Preparation of monomer-porogen solution

Monomer-porogen solution consisting of GMA, EGDMA, CyOH, DoOH and thermoinitiator azobisisobutyronitrile (AIBN) was prepared according to the following protocol. Monomer solution was prepared by mixing GMA and EGDMA in weight ratio 2:1 or 3:1, and dissolving into it 0.5 wt.% of AIBN initiator. Porogen solutions were prepared by mixing CyOH and DoOH in weight ratio 13:1. The monomer-porogen solution was obtained by mixing 30 wt% of monomer and 70 wt% of porogen solution.

### d) Preparation of the composite monolith

A PolyHIPE monolith was immersed in a cold monomer-porogen solution and left overnight in a refrigerator. The monolith was removed afterwards from the solution and immersed in a new monomer-porogen solution of the same composition and left again overnight in the refrigerator. The monolith was removed from the solution and wrapped with a teflon tape to prevent solution evaporation, or alternatively placed in appropriate housing providing sealing, and placed into a temperature-controlled oven at 60°C. Polymerization was allowed to proceed overnight. Afterwards, the monolith was removed and washed extensively with 96 vol.% EtOH before further processing.

### Example 2: PolyHIPE monolith comprising polymeric agglomerates - agglomerates formation outside the monolith

The same procedure for preparation of a polyHIPE monolith and monomer-porogen solution as described in Example 1 was used.

### a) Preparation of monomer-porogen solution containing polymeric agglomerates

Monomer-porogen solution is heated to 60°C for 30 min. Due to a thermoinitiator degradation inducing polymerization, polymeric agglomerates were formed.

### b) Preparation of the composite monolith

A monomer-porogen solution containing polymeric agglomerates was pushed through the polyHIPE monolith. The polyHIPE polymer was placed in appropriate housing providing sealing, placed into a thermostated oven at 60°C, and allowed to polymerize overnight. Afterwards, the monolith was removed and washed extensively with 96 vol.% EtOH before further processing.

### Example 3: PolyHIPE monolith comprising polymeric agglomerates - formation within the monolith

The same procedure for preparation of a polyHIPE monolith and monomer-porogen solution as described in Example 1 was used.

### a) Preparation of the composite monolith

A polyHIPE monolith was immersed in a cold monomer-porogen solution and left overnight in a refrigerator. The monolith was removed afterwards from the solution and immersed in a new monomer-porogen solution of the same composition and left again overnight in the refrigerator. The monolith was removed from the solution and wrapped with a teflon tape to prevent solution evaporation, or alternatively placed in appropriate housing providing sealing, and placed into a thermostated oven at 60°C for 1 hour. Afterwards, the monolith was removed from the oven, 96% thermostat ethanol was pushed through the monolith to remove pore content. The monolith was immersed in 96 vol.% EtOH and left overnight before further processing.

### Example 4: PolyHIPE monolith comprising polymeric agglomerates - agglomerates formation outside the monolith

The same procedure for preparation of a polyHIPE monolith and monomer-porogen solution as described in Example 2 was used.

### a) Preparation of composite monolith

A monomer-porogen solution containing polymeric agglomerates was pushed through the polyHIPE monolith. The polyHIPE polymer was placed in appropriate housing providing sealing and placed into a thermostated oven at 60°C for 1 hour. Afterwards, the monolith was removed from the oven, 96% thermostat ethanol was pushed through the monolith to remove pore content. The monolith was immersed in 96 vol.% EtOH and left overnight before further processing.

### Example 5: Determination of flow-through porosity

According to this example, 20mM Tris buffer, pH=8.0 (or phosphate buffer pH =7.0) is prepared. An empty housing of target chromatographic column which porosity has to be determined is connected to a chromatographic system. System UV measurement is set to a wavelength of 260 nm. Mobile phase flow rate of 2 CV (column volume)/min is applied - for example, for column of volume 1 ml, flow rate is 2 ml/min and for column volume of 0.1 ml the flow rate would be 0.2 ml/min. 3vol% solution of acetone is prepared by adding appropriate acetone amount in the previously prepared buffer mobile phase (Tris buffer or phosphate buffer). 10 microliters of acetone solution are injected into the chromatographic system and absorbance at 260 nm on column outlet is monitored. Peak 1^{st} momentum of acetone peak is determined. Flow rate is stopped, the housing is disconnected from the chromatographic system, opened, polyHIPE column is inserted into it, afterwards housing is closed and reconnected to the same chromatographic system. Using the same flow rate as before, same amount of acetone solution is injected and again absorbance at 260 nm on the column outlet is measured. Peak 1^{st} momentum is determined. 1^{st} momentum of a peak obtained with an empty housing is subtracted from the 1^{st} momentum of peak obtained with the housing containing the column. Obtained difference (in time unit) is multiplied by applied mobile phase flow rate. Result represents volume of the column pores through which mobile phase flows. When this volume is divided by a total monolith volume, dynamic (flow-through) porosity is obtained.

### Example 6: Determination of static porosity

Saturated solution CsCl is prepared. Such solution has at room temperature defined density of 1.9 mg/ml.

polyHIPE column (without the housing) is immersed in distilled water and left overnight. Column is weighed accurately and immersed into CsCl solution. Solution is exchanged twice every 3 hours and column is left in final CsCl solution overnight. Column is weighted again. Weight difference is divided by a density difference of two solutions (1.9 g/ml - 1g/ml=0,9 g/ml), representing the volume of pores into which solution was penetrated. When pore volume is divided by a monolith total volume static porosity is obtained.

### Example 7: Determination of the volume percentage of the macropores filled with polymeric agglomerated nanoparticles

Pore volume of the polyHIPE monolith is determined as described in Example 5 or Example 6. Into same polyHIPE monoliths, agglomerates are introduced as described in Examples 1, 2, 3 or 4. Again pore volume of same polyHIPE monolith with voids containing agglomerates is determined. Difference in pore volume determined before and after introduction of agglomerates represents volume occupied by agglomerates. By dividing this volume with initial pore volume, vol% of initial pore volume occupied by agglomerates is obtained.

### REFERENCES

Castaldo, R., Berezovska, I., Silverstein, M. S., & Gentile, G. (2023). PolyHIPEs Containing Hyper-Cross-Linked Resins: Hierarchical Porosity with Broad and Versatile Sorption Properties. ACS Applied Polymer Materials, 5(9), 6920-6931.
Jerenec, S., Šimić, M., Savnik, A., Podgornik, A., Kolar, M., Turnšek, M., & Krajnc, P. (2014). Glycidyl methacrylate and ethylhexyl acrylate based polyHIPE monoliths: Morphological, mechanical and chromatographic properties. *Reactive and Functional Polymers, 78*, 32-37.
Krajnc, P., Leber, N., Stefanec, D., Kontrec, S., & Podgornik, A. (2005). Preparation and characterisation of poly (high internal phase emulsion) methacrylate monoliths and their application as separation media. Journal of Chromatography A, 1065(1), 69-73.
Mravljak, R., Bizjak, O., Podlogar, M., & Podgornik, A. (2021). Effect of polyHIPE porosity on its hydrodynamic properties. Polymer Testing, 93, 106590.
Podgornik, A., Savnik, A., Jančar, J., & Krajnc, N. L. (2014). Design of monoliths through their mechanical properties. *Journal of Chromatography A, 1333*, 9-17.
Poljanec, N., Mravljak, R., & Podgornik, A. (2024). Influence of porosity and microstructure on compression behavior of methacrylate polymers in flow-through applications. Journal of separation science, 47(9-10), 2300767.

## Claims

1. A Polymerized High Internal Phase Emulsion (polyHIPE) chromatographic material comprising:
a) a polyHIPE monolith comprising interconnected macropores, and;
b) polymeric agglomerates which are bound to the monolith within said macropores.

2. The chromatographic material of claim 1, which comprises a porosity of at least 75%, preferably between 75% and 95%.

3. The chromatographic material of claim 1 or 2, wherein said agglomerates fill between 1% and 40% of the volume of said macropores.

4. The chromatographic material of any one of claims 1 to 3, wherein said monolith and/or said agglomerates comprise a polymeric material.

5. The chromatographic material of claim to 4, wherein said monolith and said agglomerates comprise polymeric material made from the same monomers.

6. The chromatographic material of claim 4 or 5, wherein said polymeric material comprises a methacrylate polymer, acrylate polymer, or a combination thereof.

7. The chromatographic material of any one of claims 1 to 6, wherein
a) said agglomerates have an average size ranging from 5 nm to 5 µm, and/or
b) said macropores have an average diameter range between 0.5 and 10 µm.

8. The chromatographic material of any one of claims 1 to 7, which comprises a surface area ranging between 2 and 500 square meters per mL.

9. The chromatographic material of any one of claims 1 to 8, which comprises functional groups suitable for chromatography, preferably wherein the chromatography is selected from for the group consisting of affinity chromatography, hydrophobic interaction chromatography, ion exchange chromatography or a mixed mode chromatography.

10. The chromatographic material of any one of claims 1 to 9, wherein the monolith is formed in a shape selected from the group consisting of a column, a disk, a cylinder, a capillary, a conus, an annulus, a rod, or cubus.

11. A method for preparing the polyHIPE chromatographic material according to any of claims 1 to 10, comprising the steps of:
a) preparing a polyHIPE monolith comprising interconnected macropores;
b) binding polymeric agglomerates to the monolith within said macropores, by a polymerization reaction.

12. The method of claim 11, wherein said agglomerates are prepared before said binding step, and/or during said binding step.

13. The method of claim 11 or 12, which further comprises functionalizing the chromatographic material by adding functional groups suitable for chromatography, preferably wherein the chromatography is selected for the group consisting or affinity chromatography, hydrophobic interaction chromatography, ion exchange chromatography, slalom chromatography, or a mixed mode chromatography.

14. Use of the chromatographic material of any one of claims 1 to 13 in a method of chromatographic separation, preferably wherein the chromatographic separation is by chromatography selected from for the group consisting of affinity chromatography, hydrophobic interaction chromatography, ion exchange chromatography, slalom chromatography, or a mixed mode chromatography.

15. Use of claim 14, wherein a biological substance is separated from a medium, preferably wherein the biological substance is selected from the group consisting of viral particles, vesicles, and macromolecules.
